# FASCICULE DE BREVET EUROPEEN

(11) **EP 1 455 923 B1**
(45) Date de publication et mention de la délivrance du brevet: **26.10.2005**
(21) Numéro de dépôt: 02799825.1
(22) Date de dépôt: 18.12.2002
(51) Int. Cl.: B01D 46/12, F01N 3/02

(54) **CORPS FILTRANT COMPORTANT UNE PLURALITE DE BLOCS FILTRANTS, NOTAMMENT DESTINE A UN FILTRE A PARTICULES**
FILTERKÖRPER MIT MEHREREN FILTEREINHEITEN, INSBESONDERE KONZIPIERT FÜR EINEN TEILCHENFILTER
FILTERING BODY COMPRISING A PLURALITY OF FILTERING UNITS, IN PARTICULAR DESIGNED FOR A PARTICULATE FILTER

(30) Priorité: 20.12.2001 FR 0116566
(43) Date de publication de la demande: 15.09.2004
(73) Titulaire: Saint-Gobain Centre de Recherches et d'Etudes Européen, 92400 Courbevoie (FR)
(72) Inventeur: BARDON, Sébastien, Rémi, 69006 Lyon (FR); GLEIZE, Vincent, Marc, 84450 Saint-Saturnin les Avignon (FR)
(74) Mandataire: Colas, Jean-Pierre
(86) Numéro de dépôt international: PCT/FR2002/004436
(87) Numéro de publication internationale: WO 2003/053542

(56) Documents cités:
- EP-A- 0 698 410
- US-A- 5 449 541
- PATENT ABSTRACTS OF JAPAN vol. 1999, no. 9, 30 juillet 1999 (1999-07-30) & JP 11 114339 A (NGK INSULATORS LTD), 27 avril 1999 (1999-04-27)
- PATENT ABSTRACTS OF JAPAN vol. 18, no. 465, 30 août 1994 (1994-08-30) & JP 06 146849 A (NGK INSULATORS LTD), 27 mai 1994 (1994-05-27)

## Description

L'invention concerne un corps filtrant, notamment pour un filtre à particules de gaz d'échappement d'un moteur à combustion interne d'un véhicule automobile, comportant une pluralité de blocs filtrants solidarisés au moyen d'au moins un joint intercalé entre lesdits blocs filtrants et conformé de manière à s'opposer au passage desdits gaz d'échappement entre lesdits blocs filtrants.

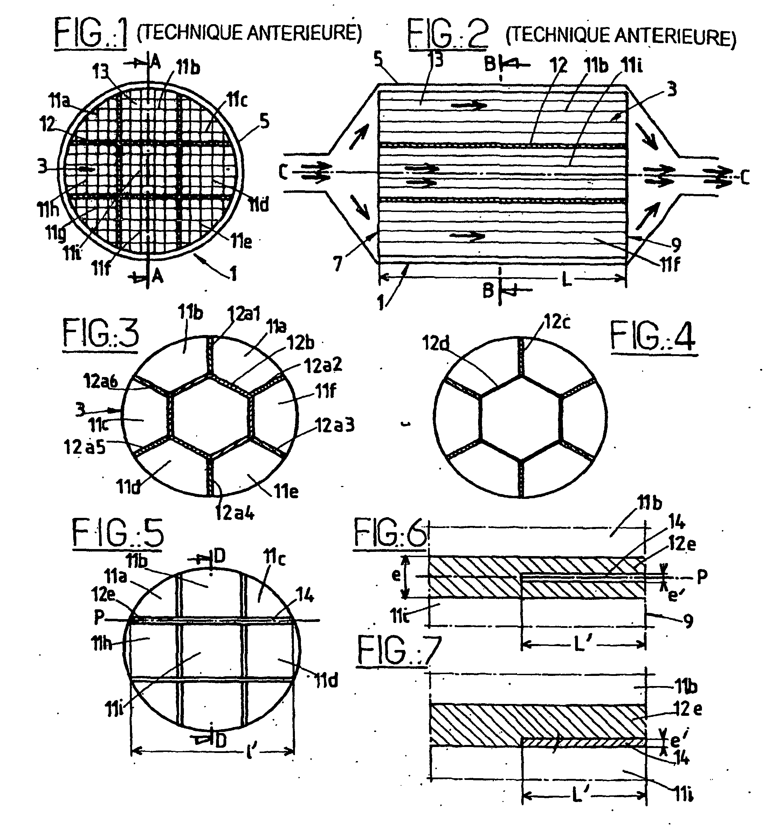

Avant d'être évacués à l'air libre, les gaz d'échappement peuvent être purifiés au moyen d'un filtre à particules tel que celui représenté sur les figures 1 et 2, connu de la technique antérieure.

Un filtre à particules 1 est représenté sur la figure 1 en coupe transversale, selon le plan de coupe B-B représenté sur la figure 2, et, sur la figure 2, en coupe longitudinale selon le plan de coupe A-A représenté sur la figure 1.

Le filtre à particules 1 comporte classiquement au moins un corps filtrant 3, inséré dans une enveloppe métallique 5, de manière à être nécessairement traversé depuis une face amont 7 jusqu'à une face aval 9 par les gaz d'échappement. Les flèches représentées indiquent le sens de circulation des gaz d'échappement.

Le corps filtrant 3 comporte généralement une pluralité de blocs filtrants 11a-11 constitués de structures poreuses en nid d'abeille, classiquement en céramique (cordiérite, carbure de silicium,...), assemblés entre eux par collage au moyen de joints 12 en ciment céramique. Les joints 12 ont classiquement une épaisseur d'environ 1 mm. Le ciment céramique, généralement constitué de silice et/ou de carbure de silicium et/ou de nitrure d'aluminium, a un module d'élasticité d'environ 5000 Mpa après frittage.

L'assemblage ainsi constitué peut être ensuite usiné pour prendre la section souhaitée, ronde ou ovoïde par exemple.

Un bloc filtrant 11a-11i comporte une pluralité de canaux 13 qui peuvent avoir, en section transversale, des formes et des diamètres différents. Chaque canal 13 est obturé à l'une ou l'autre de ses extrémités. Les gaz d'échappement sont ainsi contraints à traverser les parois des canaux 13, tandis que des particules à filtrer sont retenues.

Après un certain temps d'utilisation, les particules, ou « suies », accumulées dans les canaux du corps filtrant 3, en particulier sur la face amont 7, augmentent la perte de charge due au corps filtrant 3 et altèrent ainsi les performances du moteur. Pour cette raison, le corps filtrant doit être régénéré régulièrement, par exemple tous les 500 kilomètres.

La régénération, ou « décolmatage », consiste à oxyder les suies. Pour ce faire, il est nécessaire de les chauffer jusqu'à une température permettant leur inflammation.

Le fonctionnement du filtre à particules 1 produit un échauffement différent des différentes zones du corps filtrant 3, particulièrement pendant les phases de régénération.

Pendant ces phases, les zones du corps filtrant 3 situées à proximité de la face aval 9 sont plus chaudes que celles à proximité de la face amont 7 car les gaz d'échappement transportent vers l'aval toute l'énergie calorifique dégagée par la combustion des suies.

En outre, compte tenu de la forme du filtre à particules 1 et du trajet des gaz d'échappement qui en résulte, symbolisé par des flèches en trait gras, les suies ne s'accumulent pas nécessairement de façon homogène, s'accumulant par exemple de manière préférentielle dans la zone du filtre à proximité de son axe longitudinal C-C, encore appelé « coeur» du corps filtrant 3. La combustion des suies provoque donc une élévation de température dans le coeur du corps filtrant 3 supérieure à celle dans les zones périphériques.

Le trajet des gaz d'échappement chauds et le refroidissement de l'enveloppe métallique 5 par l'air environnant, conduisent également, mais dans une moindre mesure, à des températures supérieures au coeur du corps filtrant 3 en absence de combustion des suies.

L'inhomogénéité des températures au sein du corps filtrant 3 et les éventuelles différences de nature des matériaux utilisés pour les blocs filtrants 11a-11i et les joints 12 génèrent des dilatations locales d'amplitudes différentes.

Les interfaces entre les corps filtrants 3 et l'enveloppe 5, et entre les corps filtrants 3 et les joints 12 doivent cependant rester imperméable aux gaz, de manière à éviter toute circulation des gaz entre les faces amont 7 et aval 9, sans filtration.

En outre, le filtre à particules 1 est monté dans une ligne d'échappement et ne doit donc pas se déformer excessivement, sous peine de nuire au fonctionnement de cette ligne, par exemple en créant des fuites.

Il en résulte de fortes contraintes thermo-mécaniques, pouvant être à l'origine de fissures dans les joints et/ou dans les blocs filtrants 11a-11i, diminuant la durée de vie du filtre à particules 1.

Pour limiter le risque d'apparition de ces fissures, il est connu de sélectionner le ciment du joint 12 en fonction de sa capacité à assurer la cohésion des blocs filtrants 11a-11 i et de sa conductivité thermique. Par exemple, la demande de brevet WO 01/23069 de la société Ibiden propose d'utiliser un joint dont l'épaisseur est choisie dans la plage de 0,3 à 3 mm et constitué d'un ciment ayant une conductivité thermique comprise entre 0,1 et 10 W/m.K.

Un tel joint ne permet cependant pas de supprimer complètement le risque d'apparition des fissures.

Le but de l'invention est de fournir un nouveau bloc filtrant apte à diminuer encore ce risque.

On atteint ce but au moyen d'un corps filtrant, notamment pour un filtre à particules de gaz d'échappement d'un moteur à combustion interne d'un véhicule automobile, comportant une pluralité de blocs filtrants solidarisés au moyen d'au moins un joint intercalé entre lesdits blocs filtrants et conformé de manière à s'opposer au passage desdits gaz d'échappement entre lesdits blocs filtrants.

Ce corps filtrant est remarquable en ce que ledit joint comporte une pluralité de portions de joint adaptées localement de manière à optimiser l'affaiblissement des contraintes thermo-mécaniques susceptibles d'être générées dans ledit corps filtrant.

Selon d'autres caractéristiques du corps filtrant selon l'invention,
- au moins deux desdites portions de joint comportent des matériaux différant par leur composition et/ou leur structure et/ou leur épaisseur ;
- lesdits matériaux desdites portions de joint ont des modules d'élasticité différant d'une valeur supérieure ou égale à 10% ;
- au moins une desdites portions de joint présente des propriétés d'élasticité anisotrope ;
- ladite portion de joint comporte un tissu de silice imprégné d'un ciment;
- les épaisseurs d'au moins deux desdites portions de joint diffèrent dans un rapport d'au moins deux ;
- au moins une desdites portions de joint comporte une fente ;
- ladite fente débouche sur une des faces amont et aval dudit corps filtrant ;
- ladite fente est formée dans un plan sensiblement parallèle aux faces desdits blocs filtrants assemblés par ladite portion de joint;
- la longueur ou « profondeur » de ladite fente est comprise entre 0,1 et 0,9 fois la longueur totale dudit corps filtrant ;
- ladite fente est sensiblement adjacente à un côté d'un desdits blocs filtrants ;
- ladite fente est remplie, au moins en partie, d'un matériau de remplissage qui n'adhère ni audit bloc filtrant, ni au ciment de ladite portion de joint dans lequel elle est ménagée ;
- ledit matériau de remplissage est du nitrure de bore ou de la silice.

L'invention concerne également un filtre à particules, notamment destiné à la filtration de gaz d'échappement d'un moteur à combustion interne d'un véhicule automobile, comportant une enveloppe et un corps filtrant obtenu, suivant la présente invention, par assemblage d'une pluralité de blocs filtrants au moyen d'un joint.

D'autres caractéristiques et avantages de la présente invention apparaîtront à la lecture de la description qui va suivre et à l'examen des dessins annexés dans lesquels
- la figure 1 représente un filtre à particules selon la technique antérieure, en coupe transversale selon le plan de coupe B-B représenté sur la figure 2 ;
- la figure 2 représente le même filtre à particules, en coupe longitudinale selon le plan de coupe A-A représenté sur la figure 1 ;
- les figures 3 et 4 représentent en coupe transversale des corps filtrants selon des premier et deuxième modes de réalisation de la présente invention ;
- la figure 5 représente une vue latérale gauche, c'est-à-dire la face aval 9 étant visible, d'un corps filtrant selon un troisième mode de réalisation de la présente invention ;
- la figure 6 représente, en coupe longitudinale selon le plan de coupe D.D représenté sur la figure 5, un détail du corps filtrant représenté sur la figure 5 ;
- la figure 7 représente, en coupe longitudinale, un détail d'un corps filtrant dans un quatrième mode de réalisation de la présente invention.

Des références identiques ont été utilisées sur les différentes figures pour désigner des organes identiques ou similaires.

Pour plus de clarté, les canaux 13 n'ont pas été représentés sur les figures 3, 4, 5.

Les figures 1 et 2 ont été décrites en préambule.

Dans la suite de la description, on distingue des « portions de joint » du joint 12. On appelle « portion de joint » une fraction continue du joint 12 ayant des propriétés sensiblement constantes.

Pour un même corps filtrant 3, les différentes portions de joint contiguës forment un joint 12 unique.

Selon un premier mode de réalisation de l'invention représenté sur la figure 3, on utilise deux ciments d'assemblage différents pour coller les blocs filtrants 11a-11i d'un corps filtrant 3. Les deux ciments utilisés se différencient par leur module d'élasticité, encore appelé module d'Young. On considère qu'une différence de valeur de module d'élasticité supérieure ou égale à 10% est significative, c'est-à-dire indicative d'un comportement différent et non liée aux variations de mesure ou aux variations "normales" dues à l'hétérogénéité d'un matériau.

Dans les zones soumises aux contraintes thermo-mécaniques les plus élevées, on utilise des portions de joint 12a₁, 12a₂, 12a₃, 12a₄, 12a₅, et 12a₆, comportant un premier ciment ayant un module d'élasticité inférieur à 1000 Mpa. Dans les autres zones, on utilise une portion de joint 12b, comportant un deuxième ciment ayant un module d'élasticité d'environ 5000 Mpa et classiquement utilisé dans la technique antérieure.

Le premier ciment a un comportement plus élastique que le deuxième et peut donc mieux absorber, sans se fissurer, des variations de volume des blocs filtrants qu'il sépare. Le premier ciment limite également la transmission des contraintes entre les blocs filtrants 11a-11i et contribue ainsi avantageusement à limiter l'apparition de fissures dans ces blocs.

Il est possible de diminuer le module d'élasticité d'un ciment par exemple en augmentant sa porosité totale par l'ajout de porogènes.

Le deuxième ciment a de meilleures propriétés d'adhérence, dans les conditions de fonctionnement du filtre, que le premier ciment. La combinaison de portions de joint comportant le premier ciment avec d'autres portions de joint comportant le deuxième ciment permet ainsi d'obtenir un corps filtrant 3 robuste et adapté à de fortes contraintes thermo-mécaniques.

Avantageusement, des blocs filtrants 11a-11i, en particulier des blocs filtrants 11a-11i, disposés à la périphérie du corps filtrant 3, sont conformés et agencés de manière que les portions de joint 12a1-6 les séparant soient disposées radialement. Cette disposition améliore en effet l'absorption des contraintes radiales par les portions de joint 12a₁₋₆.

Selon un autre mode de réalisation de l'invention, le ciment d'au moins une des portions de joint a un module d'élasticité présentant un comportement anisotrope. On peut, par exemple, utiliser un tissu de silice imprégné d'un ciment classique. L'élément tissé a une structure et un comportement anisotrope et le ciment imprégné remplit les fonctions classiques d'assemblage.

Le comportement anisotrope permet de privilégier l'élasticité dans une ou plusieurs directions. Avantageusement, on dispose le tissu de silice de manière que le module d'élasticité de la portion de joint soit plus faible dans la direction longitudinale.

Selon un autre mode de réalisation de l'invention représenté sur la figure 4, on utilise une épaisseur de joint variable selon l'amplitude des contraintes thermo-mécaniques qu'elle est susceptible de subir.

On considère que l'épaisseur e1 d'une portion de joint 12c localisée dans une zone soumise à contraintes thermo-mécaniques maximales doit être au moins deux fois supérieure à l'épaisseur e2 d'une portion de joint 12d utilisée dans une zone soumise à des contraintes thermo-mécaniques minimales.

Les ciments constituant les portions de joint, même ceux utilisés pour fabriquer la portion de joint classique 12b, ont des modules d'élasticité nettement inférieurs, de l'ordre d'un facteur 10, à celui des blocs filtrants 11a-11i. C'est-à-dire que leur capacité à absorber des contraintes est beaucoup plus élevée que celle de ces blocs.

En augmentant l'épaisseur des matières les plus élastiques, on contribue donc au relâchement des contraintes.

Selon un autre mode de réalisation représenté sur les figures 5 et 6, une portion de joint 12e comporte une fente 14 de longueur L', disposée de manière à limiter la transmission des contraintes à travers la portion de joint 12e.

De préférence, la fente 14 débouche sur l'une des faces amont 7 ou aval 9.

La face aval 9 subissant les contraintes thermo-mécaniques les plus élevées pendant la régénération, la fente 14 est, de préférence encore, ménagée sur la face aval 9.

Bien entendu, la fente 14 ne débouche pas sur les deux faces amont 7 et aval 9 pour éviter que des gaz d'échappement ne traversent le corps filtrant 3 sans être filtrés. En revanche la fente 14 pourrait être non débouchante.

De préférence la fente 14 est ménagée sur toute la largeur l' de la portion de joint 12e, comme représenté sur la figure 5. De préférence encore, la fente 14 est centré sur un plan médian P parallèle aux faces des blocs filtrants adjacents 11a et 11h, 11b et 11i, et 11c et 11d, que la portion de joint 12e solidarise respectivement.

De préférence, la longueur L' (ou « profondeur ») de la fente 14 est comprise entre 0,1 et 0,9 fois la longueur totale L du corps filtrant 3. On constate en effet que pour des rapports L'/L inférieurs à 1/10, aucun effet n'est sensible et que, pour des rapports L'/L supérieurs à 9/10, la cohésion mécanique du corps filtrant 3 est insuffisante.

Pour ménager la fente 14, on peut, par exemple, introduire une feuille de papier dans l'épaisseur de la portion de joint 12e avant l'étape de frittage. La feuille de papier sera brûlée pendant le chauffage, laissant ainsi place à la fente 14.

Pour ménager la fente 14, on peut aussi, comme dans le mode de réalisation représenté sur la figure 7, déposer à la surface d'un bloc filtrant 11i un matériau qui n'adhère pas à ce bloc, ou qui n'adhère pas au ciment de la portion de joint 12e ou encore qui n'adhère ni à l'un ni à l'autre.

Ce matériau peut être par exemple du nitrure de bore déposé au moyen d'un aérosol, ou un feutre réfractaire, par exemple un matelas de fibres. Ce matériau est déposé sur le bloc filtrant 11i avant la mise en place du ciment de la portion de joint 12e et l'étape de frittage. La fente 14 qui en résulte est adjacente au bloc filtrant 11i.

Avantageusement, le remplissage de la fente 14 par un matériau tel que le nitrure de bore améliore la conduction de l'énergie calorifique entre le bloc filtrant 11i et la portion de joint 12e.

Pour les raisons exposées précédemment, la longueur L de la fente 14 doit également être comprise entre 0,1 et 0,9 fois la longueur totale L du corps filtrant 3.

Bien entendu, la présente invention n'est pas limitée aux modes de réalisation décrits et représentés ci-dessus, fournis à titre illustratif et non limitatif.

Un même corps filtrant 3 peut ainsi présenter des caractéristiques venues de plusieurs des différentes variantes de l'invention présentées ci-dessus. Par exemple, un corps filtrant. 3 peut comporter plusieurs portions de joint de natures différentes, comporter des portions de joint fendues, etc.

## Revendications

1. Corps filtrant, notamment pour un filtre à particules (1) de gaz d'échappement d'un moteur à combustion interne d'un véhicule automobile, comportant une pluralité de blocs filtrants (11a-11i) solidarisés au moyen d'au moins un joint (12) intercalé entre lesdits blocs filtrants (11a-11i) et conformé de manière à s'opposer au passage desdits gaz d'échappement entre lesdits blocs filtrants (11a-11i),
**caractérisé en ce que** ledit joint (12) comporte une pluralité de portions de joint (12a-12e) s'étendant sur toute la longueur (L) du corps filtrant et adaptées localement, ladite adaptation locale étant telle qu'au moins deux desdites portions de joint (12a,12b ;12c,12d) comportent des matériaux différant par leur composition et/ou leur structure et/ou leur épaisseur, et/ou telle qu'au moins une desdites portions de joint (12e) comporte une fente (14).

2. Corps filtrant selon la revendication 1, **caractérisé en ce que** lesdits matériaux desdites portions de joint (12a,12b) ont des modules d'élasticité différant d'une valeur supérieure ou égale à 10%.

3. Corps filtrant selon l'une quelconque des revendications précédentes, **caractérisé en ce qu'**au moins une desdites portions de joint présente des propriétés d'élasticité anisotrope.

4. Corps filtrant selon la revendication 3, **caractérisé en ce que** ladite portion de joint comporte un tissu de silice imprégné d'un ciment.

5. Corps filtrant selon l'une quelconque des revendications précédentes, **caractérisé en ce que** les épaisseurs d'au moins deux desdites portions de joint (12c,12d) diffèrent dans un rapport d'au moins deux.

6. Corps filtrant selon l'une quelconque des revendications précédentes, , **caractérisé en ce que** ladite fente (14) débouche sur une des faces dudit corps filtrant (3) par lesquelles lesdits gaz d'échappement entrent ou sortent dudit corps filtrant (3).

7. Corps filtrant selon la revendication 6, **caractérisé en ce que** ladite fente (14) débouche sur ladite face (9) dudit corps filtrant (3) par laquelle lesdits gaz d'échappement sortent dudit corps filtrant (3).

8. Corps filtrant selon l'une quelconque des revendications précédentes, **caractérisé en ce que** ladite fente (14) est formée dans un plan (P) sensiblement parallèle aux faces desdits blocs filtrants (11b,11i) assemblés par ladite portion de joint (12e).

9. Corps filtrant selon l'une quelconque des revendications précédentes, **caractérisé en ce que** la longueur L' de ladite fente (14) est comprise entre 0,1 et 0,9 fois la longueur totale L dudit corps filtrant (3).

10. Corps filtrant selon l'une quelconque des revendications précédentes, **caractérisé en ce que** ladite fente (14) est sensiblement adjacente à un côté d'un desdits blocs filtrants (11i).

11. Corps filtrant selon la revendication 9, **caractérisé en ce que** ladite fente (14) est remplie, au moins en partie, d'un matériau de remplissage qui n'adhère ni audit bloc filtrant (11i), ni au ciment de ladite portion de joint (12e) dans lequel elle est ménagée.

12. Corps filtrant selon la revendication 11, **caractérisé en ce que** ledit matériau de remplissage est du nitrure de bore ou de la silice.

13. Filtre à particules, notamment destiné à la filtration de gaz d'échappement d'un moteur à combustion interne d'un véhicule automobile, comportant une enveloppe (5) et un corps filtrant (3) obtenu par assemblage d'une pluralité de blocs filtrants (11a-11i) au moyen d'un joint (12), **caractérisé en ce que** ledit corps filtrant (3) est conforme à l'une quelconque des revendications précédentes.

## Claims

1. Filtering body, in particular for a particulate filter (1) for exhaust gases from an internal combustion engine of an automobile vehicle, comprising a plurality of filtering units (11a-11i) fastened together by means of at least one joint (12) interleaved between said filtering units (11a-11i) and conformed to oppose the passage of said exhaust gases between said filtering units (11a-11i),
**characterized in that** said joint (12) comprises a plurality of joint portions (12a-12e) extending along the total length (L) of the filtering body and locally adapted, said local adaptation being so that at least two of said joint portions (12a, 12b; 12c, 12d) comprise materials differing in their composition and/or their structure and/or their thickness, and/or so that at least one of said joint portions (12e) comprises a slot (14).

2. Filtering body according to claim 1, **characterized in that** said materials of said joint portions (12a, 12b) have Young's moduli differing by an amount greater than or equal to 10%.

3. Filtering body according to any preceding claim, **characterized in that** at least one of said joint portions has anisotropic elasticity properties.

4. Filtering body according to claim 3, **characterized in that** said joint portion comprises a silica fabric impregnated with a cement.

5. Filtering body according to any preceding claim, **characterized in that** the thicknesses of at least two of said joint portions (12c, 12d) differ in a ratio of at least two to one.

6. Filtering body according to any preceding claim, **characterized in that** said slot (14) opens onto one of the faces of said filtering body (3), through which said exhaust gases enter or leave said filtering body(3).

7. Filtering body according to claim 6, **characterized in that** said slot (14) opens onto said face (9) of said filtering body (3) through which said exhaust gases leave said filtering body (3).

8. Filtering body according to any preceding claim, **characterized in that** said slot (14) is formed in a plane (P) substantially parallel to the faces of said filtering units (11b, 11i) assembled by said joint portion (12e).

9. Filtering body according to any preceding claim, **characterized in that** the length L' of said slot (14) is from 0.1 to 0.9 times the total length L of said filtering body (3).

10. Filtering body according to any preceding claim, **characterized in that** said slot (14) is substantially adjacent a face of one of said filtering units (11i).

11. Filtering body according to claim 9, **characterized in that** said slot (14) is at least partly filled with a filler material that does not adhere to said filtering unit (11i) or to the cement of said joint portion (12e) in which it is formed.

12. Filtering body according to claim 11, **characterized in that** said filler material is boron nitride or silica.

13. Particulate filter, intended in particular for filtering exhaust gases from an internal combustion engine of an automobile vehicle, comprising an enclosure (5) and a filtering body (3) obtained by assembling a plurality of filtering units (11a-11i) by means of a joint (12), **characterized in that** said filtering body (3) conforms to any preceding claim.

## Patentansprüche

1. Filterkörper, insbesondere für einen Partikelfilter (1) für die Abgase eines Kraftfahrzeugverbrennungsmotors, mit mehreren Filterblöcken (11a-11i), die mittels mindestens einer Dichtung (12) miteinander verbunden sind, welche zwischen die Filterblöcke (11a-11i) gefügt und derart ausgebildet ist, daß sie dem Durchtritt der Abgase zwischen den Filterblöcken (11a-11i) entgegenwirkt,
**dadurch gekennzeichnet, daß**
die Dichtung (12) mehrere Dichtungsteile (12a-12e) aufweist, die sich über die gesamte Länge (L) des Filterkörpers erstrecken und lokal angepaßt sind, wobei die lokale Anpassung derart ausgestaltet ist, daß mindestens zwei der Dichtungsteile (12a, 12b; 12c, 12d) Materialien aufweisen, die in ihrer Zusammensetzung und/oder ihrer Struktur und/oder ihrer Stärke verschieden sind, und/oder daß mindestens eines der Dichtungsteile (12e) einen Schlitz (14) aufweist.

2. Filterkörper nach Anspruch 1, **dadurch gekennzeichnet, daß** die Materialien der Dichtungsteile (12a, 12b) Elastizitätsmoduli aufweisen, die um einen Wert größer oder gleich 10% verschieden sind.

3. Filterkörper nach einem der vorhergehenden Ansprüche, **dadurch gekennzeichnet, daß** mindestens eines der Dichtungsteile anisotrope Elastizitätseigenschaften aufweist.

4. Filterkörper nach Anspruch 3, **dadurch gekennzeichnet, daß** das Dichtungsteil ein mit einem Zement imprägniertes Siliziumdioxidgewebe aufweist.

5. Filterkörper nach einem der vorhergehenden Ansprüche, **dadurch gekennzeichnet, daß** die Dicke zumindest zweier Dichtungsteile (12c, 12d) sich in einem Verhältnis von mindestens zwei unterscheiden.

6. Filterkörper nach einem der vorhergehenden Ansprüche, **dadurch gekennzeichnet, daß** der Schlitz (14) in einer der Flächen des Filterkörpers (3) mündet, durch welche die Abgase in den Filterkörper (3) eintreten oder aus diesem austreten.

7. Filterkörper nach Anspruch 6, **dadurch gekennzeichnet, daß** der Schlitz (14) in der Fläche (9) des Filterkörpers (3) mündet, durch welche die Abgase aus dem Filterkörper (3) austreten.

8. Filterkörper nach einem der vorhergehenden Ansprüche, **dadurch gekennzeichnet, daß** der Schlitz (14) in einer Ebene (P) ausgebildet ist, die im wesentlichen parallel zu den Flächen der mittels dem Dichtungsteil (12e) zusammengesetzten Filterblöcke (11b, 11i) verläuft.

9. Filterkörper nach einem der vorhergehenden Ansprüche, **dadurch gekennzeichnet, daß** die Länge L' des Schlitzes (14) zwischen dem 0,1- und dem 0,9-fachen der Gesamtlänge L des Filterkörpers (3) beträgt.

10. Filterkörper nach einem der vorhergehenden Ansprüche, **dadurch gekennzeichnet, daß** der Schlitz (14) im wesentlichen einer Seite eines der Filterblöcke (11i) benachbart ist.

11. Filterkörper nach Anspruch 9, **dadurch gekennzeichnet, daß** der Schlitz (14) zumindest teilweise mit einem Füllmaterial gefüllt ist, das weder an dem Filterblock (11i), noch an dem Zement des Dichtungsteils (12e), in dem er ausgebildet ist, haftet.

12. Filterkörper nach Anspruch 11, **dadurch gekennzeichnet, daß** das Füllmaterial Bornitrid oder Kieselerde ist.

13. Partikelfilter, insbesondere zum Filtern von Abgasen eines Kraftfahrzeugverbrennungsmotors, mit einem Mantel (5) und einem Filterkörper (3), der durch Zusammenfügen mehrerer Filterblöcke (11a-11i) mittels einer Dichtung (12) erhalten wird, **dadurch gekennzeichnet, daß** der Filterkörper (3) einem der vorhergehenden Ansprüche entspricht.
